# EUROPEAN PATENT APPLICATION

(11) **EP 1 383 192 A2**
(43) Date of publication of application: **21.01.2004**
(21) Application number: 03007165.8
(22) Date of filing: 28.03.2003
(51) Int. Cl.: H01M 8/04, H01M 8/06, H01M 8/24

(54) **Chemical sensing in fuel cell systems**

(30) Priority: 05.07.2002 US 190822
(71) Applicant: Agilent Technologies, Inc., Palo Alto, CA 94306 (US)
(72) Inventor: Drake, Javit A., Mountain View, CA 94043 (US); Wilson, William H., Newark, DE 19711 (US); Klee, Matthew S., Willmington, DE 19808 (US)
(74) Representative: Liesegang, Roland, Dr.-Ing.

(57) **Abstract**

Systems and methods of chemical sensing in fuel cell systems (10) are described. In one aspect, a replaceable sacrificial sensor system (20) includes an input (48) that is configured to be coupled to a fuel stream delivery system (14), two or more sacrificial chemical sensor fuel cells (44), and a manifold (46) that is configured to selectively couple the sacrificial chemical sensor fuel cells (44) to the input (48). In another aspect, a fuel cell system (10) includes a main fuel cell, a fuel stream delivery system (14) that is configured to direct a fuel stream to the main fuel cell, an oxidant stream delivery system (16) that is configured to direct an oxidant stream to the main fuel cell, and a sensor system (20). The sensor system (20) is coupled to the fuel stream delivery system (14) at a location upstream of the main fuel cell and includes two or more sacrificial chemical sensors (44) and a manifold (46) that is configured to selectively couple the sacrificial chemical sensors (44) to the fuel stream delivery system (14). A fuel cell monitoring method also is described.

## Description

### BACKGROUND

Electrochemical fuel cells convert a fuel (e.g., substantially pure hydrogen, methanol reformate or natural gas reformate, or a methanol-containing stream) and an oxidant (e.g., substantially pure oxygen, oxygen-containing air, or oxygen in a carrier gas) to electricity and reaction product. Solid polymer electrochemical fuel cells generally employ a membrane electrode assembly that includes an ion exchange membrane or solid polymer electrolyte disposed between two electrodes. The electrodes typically are formed from a layer of porous, electrically conductive sheet material, such as carbon fiber paper or carbon cloth. The membrane electrode assembly contains a catalyst (e.g., platinum powder) at each membrane/electrode interface to induce a selected electrochemical reaction. In operation, the electrodes are connected electrically by an external electric circuit. The fuel moves through the porous anode substrate and is oxidized at the anode electrocatalyst layer. The oxidant, on the other hand, moves through the porous cathode substrate and is reduced at the cathode electrocatalyst layer to form a reaction product. In hydrogen based fuel cell systems, the catalyzed reaction at the anode produces protons. The ion exchange membrane facilitates the flow of protons from the anode to the cathode. The membrane isolates the hydrogen-containing fuel stream from the oxygen-containing oxidant stream. At the cathode electrocatalyst layer, oxygen reacts with the protons that have crossed the membrane barrier to form water as the reaction product.

Two or more fuel cells may be connected electrically in series to increase the overall power output of a fuel cell system. Such a multiple fuel cell arrangement is referred to as a fuel cell stack. The stack typically includes inlet ports and manifolds for directing the fuel stream and the oxidant stream to the individual fuel cell reactant flow passages. The stack also may include an inlet port and a manifold for directing a coolant fluid (e.g., water) stream to interior passages within the stack to absorb heat generated by the fuel cell during operation.

The fuel stream may contain impurities that do not contribute to, and may inhibit, the desired electrochemical reaction. These impurities may originate from the fuel stream supply itself, or may be generated as intermediate species during the fuel cell reactions, or may be impurities that are released from the fuel cell system. Some of these impurities may be chemically adsorbed or physically deposited on the surface of the anode electrocatalyst, blocking the active electrocatalyst sites. Such impurities are known as "electrocatalyst poisons" and their effect on electrochemical fuel cells is known as "electrocatalyst poisoning". Electrocatalyst poisoning results in reduced fuel cell performance (i.e., reduced voltage output from a fuel cell for a given current density). What constitutes a poison typically depends on the nature of the fuel cell.

Conventional methods for addressing the problem of anode electrocatalyst poisoning include purging the anode with an inert gas (e.g., nitrogen), and delivering to a poisoned fuel cell anode a "clean" fuel stream containing substantially no carbon monoxide or other poisons. Another technique for reducing carbon monoxide electrocatalyst poisoning is to continuously introduce a low concentration of oxygen into the fuel stream at a location upstream of the fuel cell. For example, U.S. Patent No. 6,210,820 purportedly discloses a method of operating a fuel cell that includes introducing a variable concentration of oxygen into an impure fuel stream that is supplied to the fuel cells in a way that reduces or prevents poisoning without excessive use of oxygen.

In some systems, a low output voltage from one or more of the fuel cells in a fuel cell stack is used as an indicator of carbon monoxide poisoning. In other systems, sensors are used to detect when poison levels have reached detrimental levels. In these systems, the sensors may be coupled in parallel with the main fuel cells. For example, U.S. Patent No. 6,001,499 has proposed a fuel cell system that includes a sensitive carbon monoxide sensor utilizing a mini proton exchange membrane (PEM) fuel cell as a probe that is coupled in parallel with the main fuel cell stack. In other systems, sensors are coupled in series with the main fuel cells in the stack. For example, WO 00/02282 has proposed an electrochemical fuel cell stack that includes a plurality of fuel cells, at least one of which is a sensor cell. The sensor cell has at least one structural dissimilarity with respect to the remaining fuel cells of the plurality. The structural dissimilarity may include, for example, a reduced sensor cell electrochemically active area, reduced electrocatalyst loading, modified anode or cathode flow field, different electrocatalyst composition, or a modified coolant flow field configuration. The sensor cell operates under substantially the same conditions as the remaining cells in the stack. However, in response to a change in a particular stack operating condition, an electrical or thermal response is induced in the sensor cell that is not simultaneously induced in the remaining fuel cells. Thus, the sensor cell may detect undesirable conditions and its response may be used to initiate corrective action. More than one sensor cell, specific to different types of conditions, may be employed in the stack. In the absence of undesirable conditions, the sensor cell can function as a power-producing fuel cell.

In still other systems, sensors are located upstream of the main fuel cell stack. For example, U.S. Patent No. 6,083,637 has proposed a fuel cell energy generating system that includes a plurality of reformate quality sensors located at different points in the reformate flow path. Each reformate quality sensor corresponds to a fuel cell with the same construction as the main fuel cells of the fuel cell stack.

### SUMMARY

In one aspect, the invention features a replaceable sacrificial sensor system that includes an input that is configured to be coupled to a fuel stream delivery system, two or more sacrificial chemical sensor fuel cells, and a manifold that is configured to selectively couple the sacrificial chemical sensor fuel cells to the input.

In another aspect, the invention features a fuel cell system that includes a main fuel cell, a fuel stream delivery system that is configured to direct a fuel stream to the main fuel cell, an oxidant stream delivery system that is configured to direct an oxidant stream to the main fuel cell, and a sensor system. The sensor system is coupled to the fuel stream delivery system at a location upstream of the main fuel cell and comprises two or more sacrificial chemical sensors and a manifold that is configured to selectively couple the sacrificial chemical sensors to the fuel stream delivery system.

In another aspect, the invention features a fuel cell method. In accordance with this inventive method, a set of one or more sacrificial chemical sensors is coupled to a fuel stream. The set of sacrificial chemical sensors is selected from one or more sensor systems that are disposed at one or more respective locations upstream of a main fuel cell. Each sensor system comprises two or more sacrificial chemical sensors. One or more of the coupled sacrificial chemical sensors are monitored. In response to detection of degradation of one or more of the coupled sacrificial chemical sensors, one or more of the degraded sacrificial chemical sensors are decoupled from the fuel stream delivery system.

Other features and advantages of the invention will become apparent from the following description, including the drawings and the claims.

### DESCRIPTION OF DRAWINGS

FIG. 1 is a block diagram of a fuel cell system, including a fuel source, a fuel stream delivery system, an oxidant stream delivery system, a fuel cell stack, multiple sacrificial sensor systems, and a controller.
FIG. 2 is a block diagram of a sacrificial sensor system.
FIG. 3 is a block diagram of a sacrificial chemical sensor.
FIG. 4 is a flow diagram of a fuel cell method.

### DETAILED DESCRIPTION

In the following description, like reference numbers are used to identify like elements. Furthermore, the drawings are intended to illustrate major features of exemplary embodiments in a diagrammatic manner. The drawings are not intended to depict every feature of actual embodiments nor relative dimensions of the depicted elements, and are not drawn to scale.

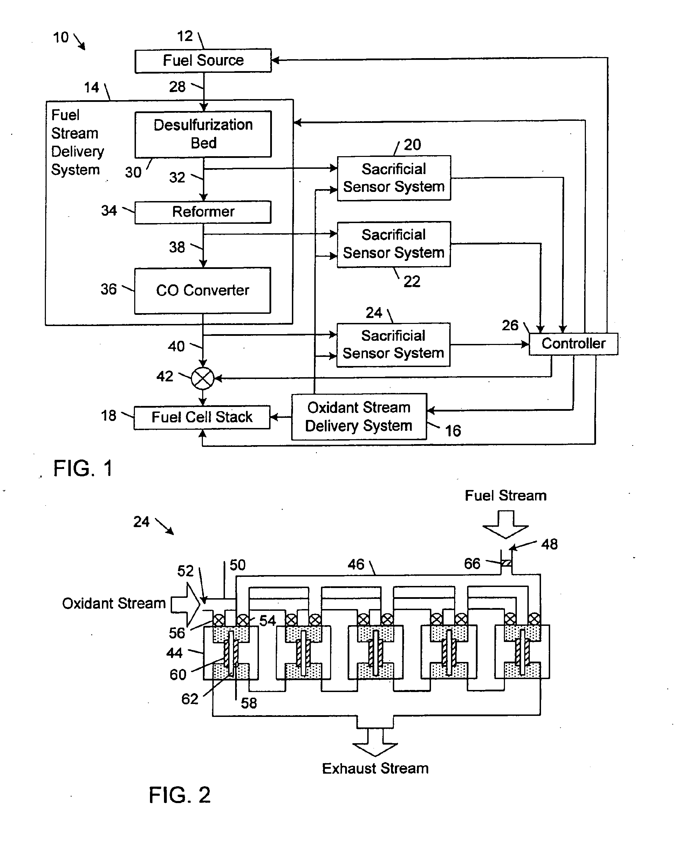

Referring to FIG. 1, in one embodiment, a fuel cell system 10 includes a fuel source 12, a fuel stream delivery system 14, an oxidant stream delivery system 16, a fuel cell stack 18, three sacrificial sensor systems 20, 22, 24, and a controller 26. Fuel source 12 may be any one of a wide variety of conventional hydrogen-containing fuels, including substantially pure hydrogen gas, a gaseous hydrogen-containing reformate stream, or methanol. In the illustrated embodiment, fuel source 12 is a hydrocarbon-based fuel source. The inbound fuel 28 is first treated by a desulfurization bed 30 that substantially reduces the concentration of sulfur-containing compounds, which are poisons to many fuel cell systems and to catalysts in reformer systems. The desulfurized fuel 32 is reformed to hydrogen and carbon monoxide (CO) by a conventional reformer 34. For high-temperature fuel cells, no further processing typically is necessary because hydrogen and CO are gases at elevated temperatures. For low-temperature fuel cells (e.g., proton exchange membrane (PEM) based fuel cells), however, the CO level in the fuel stream 38 should be reduced to parts-per-million (ppm) levels before being introduced into the fuel cell stack 18. In general, at levels at or above 10 ppm CO typically reversibly poisons the noble metal catalysts that typically are used in PEM fuel cells. In the illustrated embodiment, a conventional CO converter 36 (e.g., a water gas shift reactor) treats the reformed fuel stream 38 to convert a substantial portion of the CO in the reformed fuel stream 38 into carbon dioxide, which is non-poisonous to fuel cell stack 18.

Fuel cell stack 18 preferably includes a plurality of individual fuel cells that may be implemented using any one of a wide variety of different fuel cell technologies, including high-temperature solid oxide fuel cell technology and low-temperature solid polymer fuel cell technology. In the illustrated embodiment, the individual fuel cells in stack 18 are implemented as PEM fuel cells each of which includes a membrane electrode assembly that is formed from a thin, proton transmissive solid polymer membrane-electrolyte, or ion exchange membrane, that is disposed between an anode layer and a cathode layer. The membrane electrode assembly preferably is sandwiched between a pair of electrically conductive anode and cathode current collectors, and preferably contains channels (or openings) for distributing over the anode and the cathode the gaseous reactants respectively received from fuel stream delivery system 14 and oxidant stream delivery system 16.

In addition to CO poisoning, which typically is reversible, the fuel cells in stack 18 may be exposed to electrocatalyst poisons that are adsorbed irreversibly by the anode and cathode electrocatalysts. For example, certain sulfur-containing compounds (e.g., hydrogen sulfide) poison typical anode and cathode electrocatalysts at concentration levels on the order of 100 parts per billion (ppb). These sulfur-containing compounds also poison typical reformer catalysts at concentration levels below 30 parts per million (ppm). Although, desulfurization bed 30 may be configured to remove sulfur compounds from inbound fuel stream 28 to concentrations below 100 ppb, lapses may occur or a given desulfurization bed design may be inadequate for a particular inbound fuel stream, especially when impure fuels are used. As explained in detail below, the risk of irreversible poisoning of fuel cell stack 18 may be reduced substantially by deploying one or more sacrificial sensor systems 20-24 at one or more locations upstream of fuel cell stack 18. In response to detection of the presence of a reversible or irreversible poison in the fuel stream, controller 26 may trigger one or more responsive actions to protect fuel cell stack 18 from exposure to the detected poisons, including one or more of blocking the flow of fuel with a valve 42, venting the fuel stream, and injecting an oxidizing gas (e.g., air) into the fuel cell stack 18.

Referring to FIG. 2, in some embodiments, each sacrificial sensor system 20-24 includes two or more sacrificial sensor chemical sensors 44, a fuel manifold 46 with a fuel input 48 configured to be coupled to fuel stream delivery system 14, and an oxidant manifold 50 with an oxidant input 52 configured to be coupled to oxidant stream delivery system 16. Fuel manifold 46 includes a set of valves 54 for selectively coupling the sacrificial chemical sensors 44 to fuel input 48. Similarly, oxidant manifold 50 includes a set of valves 56 for selectively coupling the sacrificial chemical sensors 44 to oxidant input 52. In the illustrated embodiment, sacrificial chemical sensor 24 includes five sacrificial chemical sensors 44 coupled in parallel. Other embodiments may include a greater or lesser number of sacrificial chemical sensors 44.

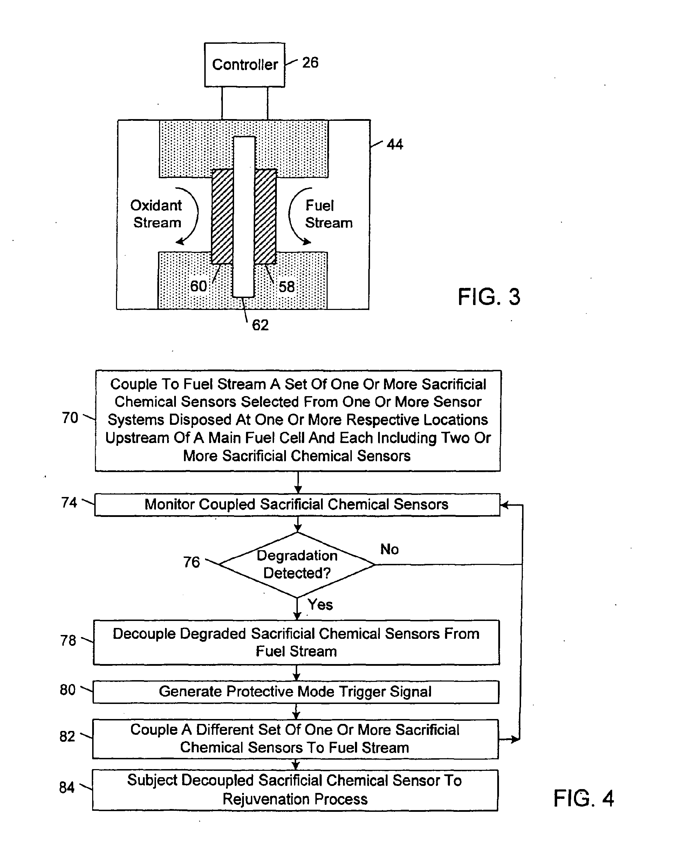

Referring to FIGS. 2 and 3, in the illustrated embodiment, each sacrificial chemical sensor 44 corresponds to a miniature version of a main fuel cell of stack 18. In this embodiment, each sacrificial chemical sensor 44 includes an anode 58 with an anode electrocatalyst, a cathode 60 with a cathode electrocatalyst, and an ion exchange membrane 62 interposed between the anode 58 and the cathode 60.

In some embodiments, the anode electrocatalyst and the cathode electrocatalyst in each sacrificial chemical sensor 44 respectively correspond to the anode electrocatalyst and the cathode electrocatalyst in the main fuel cells of stack 18. In this way, the sacrificial chemical sensors will be responsive to the same broad range of poisonous chemical species as the main fuel cells. In some embodiments, the sacrificial chemical sensors 44 are configured to be at least as responsive or sensitive, or both, as a main fuel cell with respect to one or more electrocatalyst poisons. For example, the sacrificial chemical sensor sensitivity may be increased by setting the cathode and anode electrocatalyst loading levels in the sacrificial chemical sensors 44 lower than the corresponding loading levels in the main fuel cells, or the sacrificial chemical sensors 44 may be operated at a lower temperature than the main fuel cells, or both. In other embodiments, each sacrificial chemical sensor is implemented using a different fuel cell technology than the main fuel cells. For example, in embodiments in which the main fuel cells are phosphoric acid stack based fuel cells, the sacrificial chemical sensors may be proton exchange membrane based fuel cells, which are more sensitive to CO than phosphoric acid stack based fuel cells. In these embodiments, the proton exchange membrane sacrificial chemical sensors typically will fail at CO concentration levels above 100 ppm, whereas a phosphoric acid fuel cell typically can tolerate CO concentration levels up to about 1%. In still other embodiments, each sacrificial chemical sensor system may include a chemical filter 66 (e.g., a selective membrane or adsorbent) that is interposed between the input 48 and fuel manifold 46. For example, chemical filter 66 may be configured to selectively pass electrocatalyst poisons corresponding to one or more selected chemical species and, thereby, enables the sensitivity of sacrificial chemical sensors 44 to be adjusted. In each of these ways, the sacrificial chemical sensors may be configured to provide an indication of electrocatalyst poison exposure well before electrocatalyst poison concentrations reach levels that are significantly detrimental the main fuel cells of stack 18.

The sacrificial chemical sensors of a given sensor system 20-24 may be the same or different. For example, in some embodiments, sacrificial chemical sensors 44 of a sensor system may be grouped into pairs: one sensor having a relatively low electrocatalyst loading (high sensitivity) and the other sensor having a relatively high electrocatalyst loading (low sensitivity). In these embodiments, both sensors of a pair may be coupled to the fuel stream delivery system 14 at the same time. In response to failure of the high sensitivity sacrificial chemical sensor, controller 26 may initiate a protective mode of operation. Because the low sensitivity sacrificial chemical sensor can tolerate a higher level of electrocatalyst poison, it may be used to determine when the electrocatalyst poison concentration has reached a safe level (e.g., when the response of the low sensitivity sacrificial chemical sensor remains substantially unchanged for a selected period of time after the high sensitivity sacrificial chemical sensor has failed), at which point a normal mode of operation may be resumed.

Each sacrificial chemical sensor 44 preferably is substantially smaller than a main fuel cell of stack 18. For example, in some embodiments, the anode of a sacrificial chemical sensor 44 has a active area that is on the order of 100 times smaller than the anode active area of a main fuel cell. In some embodiments, the anode of a sacrificial chemical sensor 44 has a active area that preferably is on the order of about 4 cm² or less, and more preferably on the order of about 1 cm² or less. In general, each sacrificial chemical sensor 44 should be made as inexpensively as possible, while still being able to provide a reliable indication of when a fuel stream contains one or more electrocatalyst poison species at detrimental concentration levels. In this way one or more relevant irreversible poisonous chemical species may be readily detected with the same or better sensitivity than a main fuel cell, but with a cost that is significantly less than a main fuel cell.

Referring to FIG. 4, in some embodiments, fuel cell system 10 may be operated as follows. Initially, a set of one or more sacrificial chemical sensors 44 is coupled to the fuel stream delivery system 14 (step 70). The set of sacrificial chemical sensors is selected from one or more sensor systems 20-24 that are disposed at one or more respective locations upstream of the main fuel cell stack 18. Each sensor system 20-24 includes two or more sacrificial chemical sensors. For example, as shown in FIG. 1, a sacrificial chemical sensor system 20-24 may be coupled after each stage of the fuel stream delivery system 14. In some embodiments, more than one sacrificial chemical sensor system 20-24 may be coupled at the same location of the fuel stream path upstream of fuel cell stack 18. Controller 26 configures valves 54 to selectively couple the selected set of one or more selected sacrificial chemical sensors 44 to the fuel stream delivery system 14. At the same time, controller 26 also configures valves 56 to selectively couple the selected set of sacrificial chemical sensors 44 to the oxidant stream delivery system 16. In general, controller 26 may selectively couple to the fuel stream one or more sacrificial chemical sensors 44 from one or more of the sacrificial sensor systems 20-24. Controller 26 preferably couples only a subset of the sacrificial chemical sensors 44 of a sacrificial sensor system at a time so that, in the event of sensor failure caused by exposure to one or more (reversible or irreversible) electrocatalyst poisons, one or more of the remaining sacrificial chemical sensors 44 may be coupled to monitor the fuel stream delivery system 14. In this way, fuel cell system 10 need not be completely shut down each time a sacrificial chemical sensor 44 fails.

During operation of fuel cell system 10, controller 26 monitors the responses of one or more of the selected sacrificial chemical sensors 44 (step 74). Controller 26 continues to monitor the selected sacrificial chemical sensors 44 until degradation of one or more of the sacrificial chemical sensor responses is detected. For example, in some embodiments, controller 26 may measure the current or voltage (or both) that is generated by a monitored sacrificial chemical sensor 44. In these embodiments, degradation of a sacrificial chemical sensor 44 may be detected based upon a drop in the current or voltage (or both) generated by the sacrificial chemical sensor 44. If degradation is detected (step 76), controller 26 decouples one or more of the selected sacrificial chemical sensors 44 from the fuel stream delivery system 14 (step 78). For example, if controller 26 detects that a sacrificial chemical sensor 44 of sensor system 24 has failed, controller 26 may decouple the failed sacrificial chemical sensor.

In addition to decoupling sacrificial chemical sensors with degraded responses, controller 26 also may generate a control signal that triggers a protective mode of operation that is designed to protect the main fuel cell stack 18 from exposure to one or more electrocatalyst poisons (step 80). For example, the control signal may trigger one or more of the following protection actions: blocking the flow of fuel with a valve 42, venting the fuel stream, and injecting an oxidizing gas (e.g., air) into the fuel cell stack 18. Other known protective measures also may be triggered by controller 26.

After the one or more protective measures have been executed, controller 26 may couple a different set of one or more sacrificial chemical sensors to the fuel stream delivery system (step 82).

In some embodiments, controller 26 may try to rejuvenate decoupled sacrificial chemical sensors 44 by subjecting them to a standard fuel cell rejuvenation process (e.g., bathing the sensor anode in an oxidant, such as air, or applying a voltage at a level that is sufficient to electrochemically convert the electrocatalyst poison into a non-poisonous chemical species) (step 84).

The fuel cell control systems and methods described herein are not limited to any particular hardware or software configuration, but rather they may be implemented in any computing or processing environment, including in digital electronic circuitry or in computer hardware, firmware, or software. These systems and methods may be implemented, in part, in a computer program product tangibly embodied in a machine-readable storage device for execution by a computer processor. In some embodiments, these systems and methods preferably are implemented in a high level procedural or object oriented programming language; however, the algorithms may be implemented in assembly or machine language, if desired. In any case, the programming language may be a compiled or interpreted language. The methods described herein may be performed by a computer processor executing instructions organized, e.g., into program modules to carry out these methods by operating on input data and generating output. Suitable processors include, e.g., both general and special purpose microprocessors. Generally, a processor receives instructions and data from a read-only memory and/or a random access memory. Storage devices suitable for tangibly embodying computer program instructions include all forms of non-volatile memory, including, e.g., semiconductor memory devices, such as EPROM, EEPROM, and flash memory devices; magnetic disks such as internal hard disks and removable disks; magneto-optical disks; and CD-ROM. Any of the foregoing technologies may be supplemented by or incorporated in specially-designed ASICs (application-specific integrated circuits).

Other embodiments are within the scope of the claims. For example, in addition to sacrificial chemical sensor systems 20-24, fuel cell system 10 may include one or more different chemical sensors (e.g., a refractive index sensor configured to sample inbound fuel stream 28).

## Claims

1. A replaceable sacrificial sensor system (20) comprising: an input (48) configured to be coupled to a fuel stream delivery system (14); two or more sacrificial chemical sensor fuel cells (44); and a manifold (46) configured to selectively couple the sacrificial chemical sensor fuel cells (44) to the input (48).

2. The system of claim 1, wherein each sacrificial chemical sensor fuel cell (44) comprises an anode (58) with an anode electrocatalyst, a cathode (60) with a cathode electrocatalyst, and an ion exchange membrane (62) interposed between the cathode (60) and the anode (58).

3. The system of claim 1 or 2, wherein the input (48) is configured to be coupled to a fuel steam at a location upstream of a main fuel cell, and each sacrificial chemical sensor fuel cell is substantially smaller than the main fuel cell.

4. A fuel cell system (10), comprising:
a main fuel cell;
a fuel stream delivery system (14) configured to direct a fuel stream to the main fuel cell;
an oxidant stream delivery system (16) configured to direct an oxidant stream to the main fuel cell; and
a sensor system (20) coupled to the fuel stream delivery system (14) at a location upstream of the main fuel cell and comprising two or more sacrificial chemical sensors (44) and a manifold (46) configured to selectively couple the sacrificial chemical sensors (44) to the fuel stream delivery system (14).

5. The fuel cell system of claim 4, wherein each sacrificial chemical sensor (44) is a fuel cell substantially smaller than the main fuel cell.

6. The fuel cell system of claim 4 or 5, wherein each sacrificial chemical sensor (44) has a responsiveness or a sensitivity, or both, that is at least as high as the main fuel cell with respect to one or more electrocatalyst poisons.

7. The fuel cell system of one of claims 4 to 6, further comprising a controller (26) coupled to the sensor system (20) and operable to generate a control signal based upon measurement of one or more operational responses of the sensor system (20).

8. The fuel cell system of one of claims 4 to 7, further comprising a chemical filter (66) interposed between the fuel stream delivery system (14) and the sacrificial chemical sensors (44).

9. The fuel cell system of claim 8, wherein the chemical filter (66) is configured to selectively pass electroctalyst poisons corresponding to one or more selected chemical species.

10. A fuel cell method, comprising:
coupling to a fuel stream delivery system a set of one or more sacrificial chemical sensors (44) selected from one or more sensor systems (20) disposed at one or more respective locations upstream of a main fuel cell and each comprising two or more sacrificial chemical sensors (44);
monitoring one or more of the coupled sacrificial chemical sensors (44); and
in response to detection of degradation or one or more of the coupled sacrificial chemical sensors (44), decoupling one or more of the degraded sacrificial chemical sensors (44) from the fuel stream delivery system (14).
